# EUROPEAN PATENT APPLICATION

(11) **EP 1 905 644 A1**
(43) Date of publication of application: **02.04.2008**
(21) Application number: 07018841.2
(22) Date of filing: 25.09.2007
(51) Int. Cl.: B60Q 1/44, H01H 36/00

(54) **Automotive stop lamp switch**

(30) Priority: 26.09.2006 JP 2006260584
(71) Applicant: NEC TOKIN Corporation, Sendai-shi, Miyagi 982-8510 (JP); Kabushiki Kaisha Tokai-Rika-Denki-Seisakusho, Niwa-gun, Aichi 480-0195 (JP)
(72) Inventor: Yamada, Tomio, Niwa-gun Aichi 480-0195 (JP); Miyata, Masahiko, Niwa-gun Aichi 480-0195 (JP); Kumagai, Katsuhide, Niwa-gun Aichi 480-0195 (JP); Ide, Tatsumi, Sendai Miyagi 982-8510 (JP); Ota, Yoshinori, Sendai Miyagi 982-8510 (JP)
(74) Representative: Grünecker, Kinkeldey, Stockmair & Schwanhäusser Anwaltssozietät

(57) **Abstract**

A moving element (12), which is situated on an exterior of a closed case (1) which accommodates therein a fixed contact (8), a movable contact (5) and a magnetic material (4) and is adapted to be activated in response to a depressing operation of a brake pedal of a vehicle, is provided relative to the closed case (1), and a magnet is integrated into this moving element (12), whereby the magnetic material (4) is attracted from the outside of the closed case (1) by the magnet (14) moving together with the magnet (14), so as to cause the movable contact (5) to move relative to the fixed contact (8).

## Description

### BACKGROUND OF THE INVENTION

The present invention relates to an automotive stop lamp switch which is improved with respect to an operation structure of a contact.

Conventionally, as automotive stop lamp switches, in general, there are provided automotive stop lamp switches in which a rod-like moving element is provided in such a manner as to be inserted into a case which accommodates therein a fixed contact and a movable contact, and a spring which keeps the movable contact normally in contact with or separated from the fixed contact, whereby the movable contact is moved relative to the fixed contact so as to be separated from or brought into contact with the fixed contact by the moving element moving in response to a depressing operation of a brake pedal of a vehicle (refer, for example, to JP-A-2005-235632).

In the vicinity of an automotive stop lamp switch, there exist lubricating oil applied to various types of mechanism units and inorganic and organic substances. In these situations, in the conventional automotive stop lamp switches, those lubricating oil and inorganic and organic substances enter an interior of the case from the portion where the moving element is inserted into the case and then adhere to the movable contact and the fixed contact to thereby be interposed therebetween, and thus, the conventional automotive stop lamp switches so configured have had a fear that a problem of electric current conduction failure may be induced between the contacts by, in particular, a silicone component.

### SUMMARY OF THE INVENTION

The invention has been made in view of the situations, and therefore, an object thereof is to provide an automotive stop lamp switch which prevents the intrusion of lubricating oil and the like into a case which accommodates therein a fixed contact and a movable contact, so as to enable the contact and separation of these fixed contact and movable contact.

With a view to attaining the object, according to the invention, there is provided an automotive stop lamp switch including a fixed contact, a movable contact which corresponds to the fixed contact, a magnetic material integrated with the movable contact, a closed case adapted to accommodate therein the fixed contact, the movable contact and the magnetic material, a moving element situated outside of the closed case and adapted to move in response to a depressing operation of a brake pedal of a vehicle, and a magnet integrated into the moving element, wherein the magnetic material is attracted from the outside of the closed case by the magnet moving together with the moving element, so as to move the movable contact relative to the fixed contact (a first aspect of the invention).

According to the means described above, the movable contact can be moved relative to the fixed contact without entering the interior of the closed case by virtue of the action of the magnetic force which reaches the magnetic material inside the closed case from the magnet lying outside of the closed case. Consequently, there occurs no case where lubricating oil, inorganic substances and organic substances which are present in the vicinity of the closed case intrude into the interior of the closed case, and hence, the contact and separation of the fixed contact and the movable contact which are accommodated in the closed case can be enabled, whereby the fear inherent in the related art can be eliminated that the problem of electric current conduction failure may be induced between the contacts by the substances that have intruded into the closed case.

### BRIEF DESCRIPTION OF THE DRAWINGS

Fig. 1 is a vertical sectional view of a whole automotive stop lamp switch which shows an embodiment of the invention.
Fig. 2 is a perspective view from a magnet to a magnetic material.
Fig. 3 is a vertical sectional view of a main part of the switch in a state before a depressing operation of a brake peal.
Fig. 4 is a vertical sectional view of the main part of the switch in a state after the depressing operation of the brake pedal.

### DETAILED DESCRIPTION OF PREFERRED EMBODIMENTS

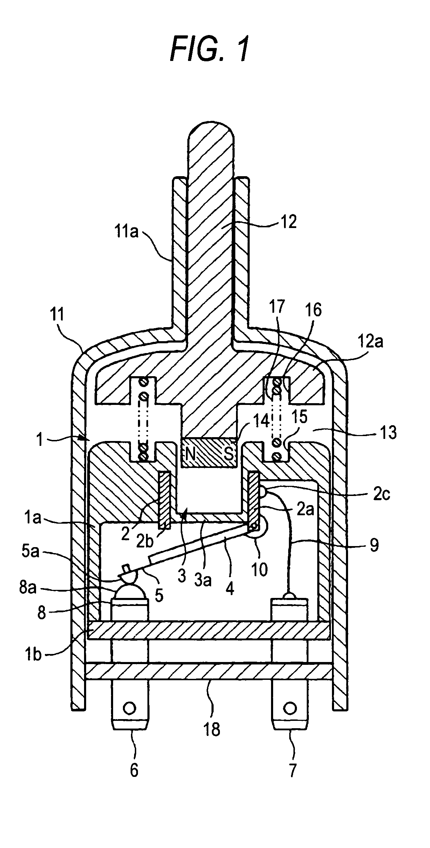

Hereinafter, an embodiment of (or a mode for carrying out) the invention will be described by reference to the accompanying drawings.
Firstly, Fig. 1 shows an overall configuration of an automotive stop lamp switch, in which a closed case 1 makes up a main body thereof. This closed case is made up of a case main body portion 1a and a case bottom plate 1a of a cylindrical container which closed at a ceiling portion and is opened at a bottom portion, and both the constituent members are made of a non-magnetic material such as plastic.

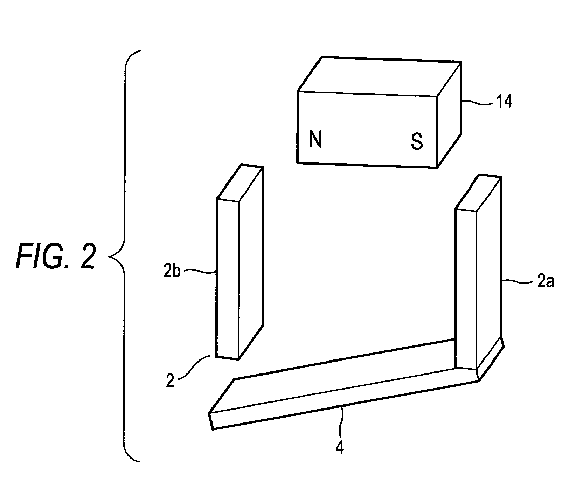

A yoke 2 is embedded in an uppermost portion of the case main body portion 1a. This yoke 2 is such as to be made of a magnetic material such as iron and is, as is shown in, for example, Fig. 2, made up of two yokes, a right-hand side yoke 2a and a left-hand side yoke 2b. These yokes are inserted when molding a case main body portion 1a, and when the case main body portion 1a is molded, the yoke 2 (the right-hand side yoke 2a and the left-hand side yoke 2b) is then embedded in the uppermost portion of the case main body portion 1a.

To describe the embedded state of the yoke in detail, the other portions of the case main body portion 1a which exclude lower end portions of the respective right-hand side yoke 2a and left-hand side yoke portion 2b and most of an external surface portion of the right-hand side yoke portion 2a are situated inside a wall of the case main body portion 1a, and the lower end portions of the respective right-hand side yoke 2a and left-hand side yoke 2b and most of the external surface portion of the right-hand side yoke 2b are exposed from the wall of the case main body portion 1a. In addition, of those exposed portions, the external surface portion of the right-hand side yoke portion 2 has an electrical connecting portion 2c.

A hole portion 3 is formed in a central portion of the uppermost portion of the case main body portion 1a in such a manner as to be positioned between the right-hand side yoke 2a and the left-hand side yoke 2b, and a bottom portion 3a of this hole portion 3 is closed.
One end portion of the magnetic material 4 is supported on the lower end portion of the right-hand side yoke 2a in such a manner as to rotate or swing vertically. This magnetic material 4 is made of a magnetic material such as iron and is also made of a conductor material. The magnetic material 4 extends from the one end portion to the other end portion which lies on the left, and a movable contact 5 is provided to be integrated with the magnetic material 4 in such a manner as to extend leftwards further from the other end portion. The movable contact 5 has a contact point 5a on a lower side of a distal end portion thereof.

In contrast to this, two connecting terminals 6, 7 are provided to be inserted into the case bottom plate 1b, and the contact terminal 6 on one side (in this case, the left-hand side) has a fixed contact 8 at an uppermost portion thereof. The fixed contact 8 has a contact point 8a on an upper surface portion thereof.
The connecting terminal 7 on the other side (in this case, on connects to the electrical connecting portion 2c of the right-hand side yoke 2a at an uppermost portion via a conductor element 9 and hence to the right-hand side yoke 2a. In addition, the right-hand side yoke 2a also electrically connects to the magnetic material 4 via a conductor element 10 at the lower end portion thereof which is exposed from the case main body portion 1a.

In addition, the case bottom plate 1b tightly closes an opening in the bottom portion of the case main body portion 1a, whereby the movable contact 5 and the fixed contact 8 are made to correspond to each other at the respective contact points 5a, 8a, and a construction is completed in which the fixed contact 8, the movable contact 5, the magnetic material 4 and furthermore the yoke 2 (the right-hand side yoke 2a and the left-hand side yoke 2b) are accommodated in the interior of the closed case 1 which is made up of the case main body portion 1a and the case bottom plate 1b.

In addition, the movable contact 5 is made such that the contact point 5a is normally kept in contact with the contact point 8a of the fixed contact 8. In addition, the connecting terminals 6, 7 are made to protrude downwards from the case bottom plate 1b at lower portions thereof, so that conductive wires, not shown, are made to be connected to the protruding portions via connectors, not shown, respectively.

On the other hand, a cover 11 is mounted on an exterior of the case main body portion 1a, and this cover 11 has a cylindrical portion 11a at a central portion of an upper portion thereof, and the rod-like moving element 12 is passed through this cylindrical portion 11a. The moving element 12 has a collar portion 12a at a lower portion thereof which is situated in a space 13 defined between the closed case 1 below the cylindrical portion 11a and the cover 11 and has a magnet 14 which is integrated therewith at a lowermost portion thereof below the collar portion 12a.
In this case, the magnet 14 is a permanent magnet, in which as viewed in the figure, for example, a left-hand side portion makes up an N pole and a right-hand portion makes up an S pole, and is made to enter deeply the interior of the hole portion 3 in the closed case 1 (the case main body portion 1a) together with the lowermost portion of the moving element 12.

In addition, a coil spring 17 is interposed between a spring seat recessed annular portion 15 formed on an upper surface portion of the closed case 1 and a spring seat recessed annular portion 16 formed on a lower surface side of the collar portion 12a of the moving element 12, and this coil spring 17 is made to function as a biasing device for exhibiting a biasing force which normally pushes up the moving element 12 to thereby locate the magnet 14 at an uppermost portion (a position spaced apart upwards from the yoke 2) of the hole portion 3 in the closed case 1.
In addition, an upper portion of the moving element 12 which protrudes further upwards than the cover 11 corresponds to a brake pedal of a vehicle, not shown. Additionally, the cover 11 has a bottom plate 18 which lies below the case bottom plate 1b of the closed case 1, and the connecting terminals 6, 7 also protrude downwards from the bottom plate 18.

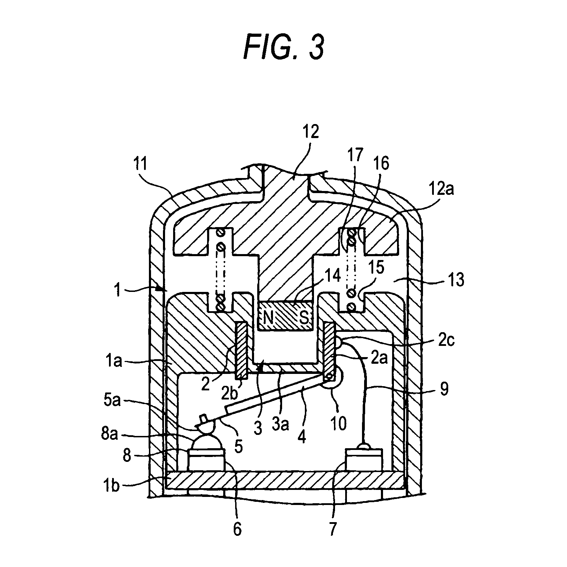

Next, the function of the configuration that has been described heretofore will be described.
The main part of the automotive stop lamp switch is in a state shown in Fig. 3 before the brake pedal of the vehicle is operated to be depressed. Namely, as has been described above, the moving element 12 is pushed up by the coil spring 17, whereby the magnet 14 is positioned in the uppermost portion of the hole portion 3 in the closed case 1, and the movable contact 5 is kept in contact with the contact point 8a of the fixed contact at the contact point 5a. As this occurs, the movable contact 5 establishes an electrical conduction between the connecting terminals 6, 7 by an electrical path which extends from the fixed contact 8 to the conductor element 9 via the movable contact 5, the magnetic material 4, the conductor element 10 and the right-hand side yoke 2a.

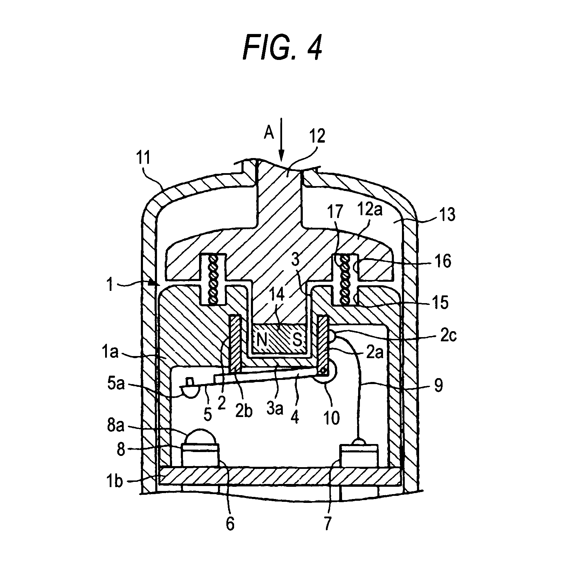

When the brake pedal of the vehicle is operated to be depressed from this state, the moving element 12 compresses the coil spring 17 in response to the depression of the brake pedal and moves together with the magnet 14 as indicated by an arrow A n Fig. 4. Consequently, since the magnet 14 enters deeply the interior of the hole portion 3 in the closed case 1 to thereby be positioned between the right-hand side yoke 2a and the left-hand side yoke 2b, these right-hand side yoke 2a and left-hand side yoke 2b are magnetized, whereby a magnetic force comes to be applied to the magnetic material 4. Because of this, the magnetic material 4 is attracted to the left-hand side yoke 2b and is then attracted by the magnet 14, and since this causes the movable contact 5, which is integrated with the magnetic material 4, to move away from the fixed contact 8, whereby the contact point 5a is caused to move away from the contact point 8a of the fixed contact 8, the electric path between the connecting terminals 6, 7 is cut off. Thus, the automotive stop lamp switch is made to react to the depressing operation of the brake pedal of the vehicle, whereby an automotive stop lamp, not shown, is illuminated.

In addition, when the depressing operation of the brake pedal of the vehicle is released, everything is restored to the original state, and the movable contact 5 is brought into contact with the contact point 8a of the fixed contact 8 at the contact point 5a, whereby the stop lamp of the vehicle is turned off.

In this way, according to the configuration of the embodiment, by virtue of the function of the magnetic force which reaches the magnetic material 4 lying inside the closed case 1 from the magnet 14 lying outside the closed case 1, the movable contact 5 can be moved relative to the fixed contact 8 without entering the interior of the closed case 1. Consequently, the contact and separation between the fixed contact 8 and the movable contact 5 which are both accommodated in the closed case 1 can be enabled with lubricating oil, inorganic substances and organic substances which are present in the vicinity of the automotive stop lamp switch prevented from entering the interior of the closed case 1, whereby the fear inherent in the related art can be eliminated that the problem of electric current conduction failure may be induced between the contacts by the substances that have intruded into the closed case.

In addition, in the case of the configuration of this embodiment, the closed case 1 has the yoke 2 adapted to correspond to the magnetic material 4, and the magnetic force of the magnet 14 is made to reach the magnetic material 4 via the yoke 2, whereby since the attraction of the magnetic material 4 by the magnetic force of the magnet 14 can be implemented more strongly, the movable contact 5 can be caused to move relative to the fixed contact 8 in a more ensured fashion.

Note that the invention is not limited to the embodiment that has been described heretofore and illustrated in the accompanying drawings, and in particular, the configuration may be altered in such a way that the positional relationship between the fixed contact 8 and the movable contact 5 is reversed vertically, so that the movable contact 5 is normally kept separated from the fixed contact 8, and the movable contact 5 is brought into contact with the fixed contact 8 in response to the depressing operation of the brake pedal of the vehicle. In addition, the magnetic material 4 may be such as to be made up of a magnet (specifically speaking, a permanent magnet) and as this occurs, the magnetic material 4 is disposed in such a polarity relationship that the magnetic material 4 is attracted by the magnet 14. In addition to these, the invention can be embodied by being changed as required without departing from the spirit and scope of the invention.

## Claims

1. An automotive stop lamp switch comprising:
a fixed contact;
a movable contact which corresponds to the fixed contact;
a magnetic material integrated with the movable contact;
a closed case adapted to accommodate therein the fixed contact, the movable contact and the magnetic material;
a moving element located outside of the closed case and adapted to move in response to a depressing operation of a brake pedal of a vehicle; and
a magnet integrated into the moving element,
wherein the magnetic material is attracted from the outside of the closed case by the magnet moving together with the moving element, so as to move the movable contact relative to the fixed contact.

2. The automotive stop lamp switch according to claim 1,
wherein the closed case includes a yoke for the magnetic material in such a manner that a magnetic force of the magnet is allowed to reach the magnetic material via the yoke.
